# FASCICULE DE BREVET EUROPEEN

(11) **EP 3 541 709 B1**
(45) Date de publication et mention de la délivrance du brevet: **11.08.2021**
(21) Numéro de dépôt: 17811995.4
(22) Date de dépôt: 16.11.2017
(51) Int. Cl.: B65C 9/26, B44C 1/10

(54) **DISPOSITIF ET PROCEDE POUR APPLIQUER MANUELLEMENT UNE ETIQUETTE SUR UN OBJET PREDETERMINE**
VORRICHTUNG UND VERFAHREN ZUM AUFBRINGEN EINES ETIKETTS AUF EINEM BESTIMMTEN ARTIKEL
DEVICE AND METHOD FOR MANUALLY APLLYING A LABEL ON A PREDETERMINED OBJECT

(30) Priorité: 18.11.2016 FR 1661215
(43) Date de publication de la demande: 25.09.2019
(73) Titulaire: Société BIC, 92110 Clichy (FR)
(72) Inventeur: SABATER, Charles J., 08902 L'Hospitalet de Llobregat Barcelona (ES)
(74) Mandataire: Cabinet Beau de Loménie
(86) Numéro de dépôt international: PCT/FR2017/053135
(87) Numéro de publication internationale: WO 2018/091827

(56) Documents cités:
- DE-U1-202004 020 883
- US-A1- 2007 227 988
- US-A1- 2008 295 351

## Description

### DOMAINE DE L'INVENTION

L'invention concerne le domaine des dispositifs pour appliquer manuellement, en tout ou partie, une étiquette sur un objet, ainsi qu'un procédé de mise en œuvre d'un tel dispositif.

### ETAT DE LA TECHNIQUE ANTERIEURE

On connait des dispositifs automatisés d'application d'étiquette sur un objet. De tels dispositifs donnent en général pleine satisfaction du point de vu de la précision du collage de l'étiquette sur l'objet, ainsi que du rendement, c'est-à-dire du nombre d'étiquettes collées pendant un laps de temps donné.

Toutefois, ces dispositifs connus sont adaptés pour des productions à échelle industrielle, mais pas à la production de petites séries, voire à la production à l'unité. Par ailleurs, une application manuelle d'une étiquette sur un objet est souvent fastidieuse et imprécise. Il existe donc un besoin en ce sens.

US 2008/295351 divulgue un dispositif pour appliquer manuellement une étiquette sur un objet, comprenant deux réceptacles, un adjacent à l'autre, DE 20 2004 020883 divulgue un dispositif pour maintenir un document lorsqu'un autocollant est appliqué et US 2007/227988 divulgue un dispositif et un procédé pour attacher une étiquette sur un dossier.

### PRESENTATION DE L'INVENTION

Le présent exposé concerne un dispositif pour appliquer manuellement une étiquette sur un objet prédéterminé, l'invention étant défini par les revendications jointes.

Un mode de réalisation concerne un dispositif pour appliquer manuellement une étiquette sur un objet prédéterminé (si après, et sauf indication contraire, le « dispositif »), comprenant un premier réceptacle configuré pour recevoir et maintenir l'étiquette et un second réceptacle configuré pour recevoir et maintenir l'objet dans une position prédéterminée par rapport au premier réceptacle, le second réceptacle étant adjacent au premier réceptacle et présentant une fenêtre débouchant sur le premier réceptacle de manière à pouvoir appliquer l'étiquette en tout ou partie sur l'objet.

On comprend que l'étiquette peut être une étiquette autocollante, mais pas nécessairement. Par exemple, l'étiquette peut être une étiquette encollée juste avant l'application de l'étiquette sur l'objet.

On comprend également que l'objet est un objet prédéterminée, mais que cet objet peut être quelconque : par exemple une coque de téléphone portable, une couverture de livre ou de cahier, un briquet, un stylo, un rasoir (ou le manche d'un rasoir), un verre, une bouteille, un bocal, etc. Le dispositif ne peut donc être utilisé qu'avec un objet prédéterminé, à savoir un objet d'une forme et d'une taille bien précise. La fenêtre peut soit couvrir toute la surface de l'objet sur laquelle on souhaite appliquer l'étiquette (cette surface étant plane ou courbe), soit une partie seulement de la surface sur laquelle on souhaite appliquer l'étiquette. Dans ce dernier cas, on comprend que l'utilisateur finalise manuellement l'application de l'étiquette sur l'objet en retirant ensemble l'objet et l'étiquette en partie collée sur l'objet, du dispositif. Par exemple, le dispositif est configuré pour appliquer une étiquette de forme et de taille prédéterminée sur l'objet prédéterminé, mais pas nécessairement.

Le premier réceptacle permet de recevoir l'étiquette dans une position prédéterminée et reproductible. De même, second réceptacle permet de recevoir un objet prédéterminé dans une position prédéterminée et facilement reproductible. Ainsi, grâce au premier réceptacle et au second réceptacle, on peut facilement disposer l'objet dans une position prédéterminée et reproductible par rapport à l'étiquette (et vice versa).

Les inventeurs ont constaté que l'étape initiale de positionnement de l'étiquette par rapport à l'objet (ou vice-versa) et de premier contact entre l'étiquette et l'objet, est l'étape déterminante pour la réussite d'une application précise et satisfaisante d'une étiquette sur un objet, et ce quelles que soient les étapes suivantes.

Par ailleurs, grâce à la fenêtre, une fois que l'étiquette et l'objet sont disposés dans leur position relative prédéterminée, l'étiquette se colle directement sur l'objet de manière précise et facilement reproductible.

Ainsi, grâce au dispositif, on s'assure de réaliser l'étape initiale de positionnement de l'étiquette par rapport à l'objet (ou vice-versa) et de premier contact entre l'étiquette et l'objet, de manière facile, reproductible et satisfaisante, et ce quelles que soient les éventuelles étapes ultérieures de finalisation d'application de l'étiquette sur l'objet.

Le premier réceptacle comprend une embase présentant une surface formant support pour l'étiquette, et au moins un élément de maintien configurée pour limiter le déplacement de l'étiquette par rapport à la surface.

On comprend que l'embase définit une surface formant support sur laquelle on dispose l'étiquette avant de l'appliquer sur l'objet. Par la suite, et sauf indication contraire, par « surface » on entend « surface formant support ». Cette surface peut être courbe ou plane. Par exemple, si cette surface est plane, le positionnement de l'étiquette est plus facile, et on évite tout risque que l'étiquette forme un pli. On assure donc une application lise et homogène de l'étiquette. Bien entendu, dans le cas où la surface de l'objet sur laquelle on souhaite appliquer l'étiquette est convexe tandis que la surface formant support est plane, on comprend que l'application de l'étiquette sur l'objet au sein du dispositif est partielle, et que cette application est finalisée manuellement en dehors du dispositif.

Le premier réceptacle comprend un ou plusieurs éléments de maintien. Pas la suite, et sauf indication contraire par « élément de maintien », on entend « au moins un élément de maintien ». L'élément de maintien permet de placer l'étiquette dans une position prédéterminée par rapport à la surface et de limiter les déplacements éventuels de l'étiquette sur cette surface lors de l'application de l'étiquette sur l'objet. La précision et la reproductibilité de l'application sont ainsi assurées.

L'élément de maintien comprend au moins une butée.

On comprend que l'élément de maintien comprend une ou plusieurs butées. Par la suite, et sauf indication contraire par « butée » on entend « au moins une butée ». Une telle butée permet de facilement placer l'étiquette dans une position prédéterminée sur la surface, et ce avec une précision satisfaisante. Par exemple, la butée est formée par une saillie formée sur la surface.

Le premier réceptacle comprend au moins une rainure adjacente à la surface, la rainure présentant un fond formant un angle avec la surface, le fond formant la butée.

On comprend que le premier réceptacle comprend une ou plusieurs rainures. Par la suite, et sauf indication contraire par « rainure » on entend « au moins une rainure ». On comprend qu'une rainure forme un élément de maintien.

La rainure est adjacente à la surface, le fond de la rainure formant un angle avec la surface. En d'autres termes, la rainure est tangente à la surface et débouche sur la surface. De manière générale, une rainure présente un fond duquel s'étendent et deux surfaces latérales débouchant sur l'ouverture de la rainure. Ainsi, on comprend qu'une surface latérale de la rainure s'étend dans le prolongement de la surface.

Une telle rainure permet d'améliorer le maintien de l'étiquette en position. En effet, non seulement la rainure forme une butée limitant le déplacement de l'étiquette parallèlement à la surface, mais permet également un certain blocage de l'étiquette perpendiculairement à la surface. Un certain plaquage de l'étiquette sur la surface est ainsi réalisé. Ceci permet par exemple d'éviter tout enroulement de l'étiquette lors de l'application de l'étiquette sur l'objet. Par ailleurs, ceci permet d'éviter que l'étiquette ne s'envole si l'utilisateur faisait un mouvement brusque générant un courant d'air. La qualité du maintien et du positionnement de l'étiquette est ainsi améliorée.

Dans certains modes de réalisation, la surface est de forme carrée ou rectangulaire, une rainure étant ménagée sur trois côtés du carré ou du rectangle, à la périphérie de la surface.

On comprend donc que le dispositif comprend trois rainures s'étendant respectivement sur trois côtés du carré ou du rectangle tandis que le quatrième côté du carrée ou du rectangle ouvert. Une telle configuration permet de maintenir l'étiquette au moins en trois points. Un tel maintien est particulièrement efficace et satisfaisant. On comprend qu'un seul côté du carré ou du rectangle est dépourvu de rainure, grâce à quoi l'utilisateur peut facilement engager l'étiquette dans les trois rainures par ce côté dépourvu de nervure. Selon une variante, pour encore améliorer le maintien de l'étiquette, le côté dépourvu de nervure peut présenter une saillie s'étendant perpendiculairement à la surface, par exemple une nervure parallèle au côté du carré ou du rectangle, grâce à quoi l'étiquette est bloquée au fond de la rainure ménagée sur le côté opposé.

Dans certains modes de réalisation, chaque rainure est ménagée dans une paroi sensiblement perpendiculaire à la surface.

Par « sensiblement perpendiculaire » on entend que la paroi forme un angle compris entre 45° et 90° avec la surface. On comprend que les parois forment une bordure sur le pourtour de la surface, les rainures étant ménagées dans les parois, dans le prolongement de la surface. Une telle structure est robuste, fiable et facile à fabriquer au dispositif.

Dans certains modes de réalisation, le second réceptacle comprend deux parties configurées pour supporter l'objet, chaque partie étant configurée pour coopérer par complémentarité de forme avec l'objet.

Par exemple, si l'objet présente une forme générale concave, les parties présentent des portions convexes de manière à épouser une partie de la surface concave de l'objet. Des telles surfaces permettent de recevoir l'objet de manière stable et reproductible. Bien entendu, on comprend que les deux parties sont distinctes tandis que la fenêtre est disposée entre ces deux parties.

Dans certains modes de réalisation, une première paroi parmi les trois parois forme une partie tandis que l'autre partie est formée par une barre parallèle à la première paroi, ladite barre s'étendant depuis une paroi adjacente à la première paroi.

En d'autres termes la première paroi forme une première partie tandis que la deuxième partie est formée par la barre. On comprend que la barre s'étend sensiblement parallèlement (i.e. en formant un angle compris entre 0° et 45°) avec première paroi. On comprend également que la barre s'étend entre deux côtés opposés de la surface, sans toutefois contacter la surface, de manière à pouvoir glisser l'étiquette entre la surface (ou l'embase) et la barre. Une telle structure est robuste, fiable et facile à fabriquer au dispositif.

Dans certains modes de réalisation, l'étiquette est une étiquette autocollante.

Le dispositif est particulièrement bien adapté aux étiquettes autocollantes. L'utilisation du dispositif avec de telles étiquettes permet de réaliser un collage propre, rapide et précis dans toutes les conditions d'utilisations.

Dans certains modes de réalisation, l'étiquette autocollante comporte deux protections amovibles distinctes protégeant la surface collante de l'étiquette, une des protections étant de même forme que la fenêtre et présentant une superficie comprise entre 80% et 120% de la superficie de la fenêtre.

Grâce à de telles étiquettes, il est possible de retirer d'abord la protection en vis-à-vis de la fenêtre, ce qui permet d'appliquer l'étiquette sur l'objet, sans risque de salir la partie encollée de l'étiquette qui n'est pas en vis-à-vis de la fenêtre ou de former des plis. Une fois que l'étiquette est en partie collée sur l'objet, on retire l'ensemble du dispositif, puis on retire la seconde protection pour finaliser l'application de l'étiquette. Par ailleurs, la forme et la superficie de la protection permettent de minimiser les risques que la surface collante de l'étiquette exposée lors du retrait de la protection ne se colle par inadvertance sur le dispositif, par exemple sur la barre, lors de l'insertion/retrait de l'étiquette dans/depuis le dispositif. Une telle configuration permet de réaliser un collage particulièrement propre, rapide et précis dans toutes les conditions d'utilisations.

Dans certains modes de réalisation, lequel l'objet est cylindrique.

On rappelle qu'un cylindre est une surface résultant de la réunion de toutes les droites ayant une même direction et coupant une courbe donnée. Les droites sont appelées génératrices du cylindre, et la courbe est appelée la directrice du cylindre. Ainsi, le cylindre peut avoir une section transversale de forme quelconque, polygonale, courbe, ovoïde, elliptique, circulaire, etc.

Le dispositif est particulièrement bien adapté pour appliquer une étiquette sur un objet cylindrique, tel qu'un stylo ou un briquet, notamment un briquet de section elliptique. Grâce au dispositif, on applique l'étiquette sur une partie de l'objet cylindrique, puis on retire l'objet du dispositif, l'étiquette étant en partie collée sur l'objet, et enfin on roule l'objet sur le reste de l'étiquette pour finaliser l'application de l'étiquette. Le positionnement et le premier collage de l'étiquette sur l'objet étant parfaitement réalisé grâce au dispositif, la finalisation de l'application de l'étiquette devient une opération particulièrement simple.

Dans certains modes de réalisation, le deuxième logement est configuré pour recevoir l'objet de sorte que l'axe de la forme cylindrique de l'objet soit parallèle à deux rainures et perpendiculaire à la troisième rainure, le deuxième réceptacle étant ouvert du côté de la surface dépourvu de rainure.

On comprend donc que les parois délimitant le second réceptacle forment une glissière recevant l'objet, la glissière étant ouverte du côté de la surface dépourvu de rainure. On comprend également que l'étiquette est collée sur la surface cylindrique de l'objet. On peut ainsi facilement retirer l'objet et l'étiquette collée sur l'objet, en faisant glisser l'objet au sein de la glissière formée par le second réceptacle, du côté ouvert du second réceptacle. Un tel mouvement est donc parallèle à l'axe de la forme cylindrique de l'objet. L'objet entraine ainsi l'étiquette collée sur la surface cylindrique de l'objet, en la dégageant des rainures. Les rainures aident bien entendu à guider l'étiquette lors du retrait de l'objet du dispositif.

Le présent exposé concerne également un procédé d'application manuelle d'une étiquette sur un objet prédéterminé.

Un mode de réalisation concerne un procédé d'application manuelle d'une étiquette sur un objet prédéterminé, comprenant les étapes de fournir un dispositif selon l'un quelconque mode de réalisation décrit dans le présent exposé, disposer une étiquette dans le premier réceptacle de sorte qu'une partie collante de l'étiquette soit disposée en regard de la fenêtre du second réceptacle, disposer l'objet dans le second réceptacle, grâce à quoi la partie collante est collée sur l'objet, retirer l'objet et l'étiquette du dispositif, et coller le reste de l'étiquette sur l'objet.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un dispositif pour appliquer manuellement une étiquette sur un objet prédéterminé, vu en perspective,
- la figure 2 représente le dispositif de la figure 1, vu selon la flèche II,
- la figure 3 représente le dispositif de la figure 1, vu selon la flèche III,
- la figure 4 représente une étiquette autocollante comprenant deux protections amovibles,
- les figures 5A et 5B représentent les premières étapes d'application manuelle d'étiquette sur un objet prédéterminé, en utilisant le dispositif de la figure 1 et l'étiquette de la figure 4,
- la figure 6 représente les étapes suivantes d'application manuelle d'étiquette sur un objet prédéterminé, et
- la figure 7 représente la dernière étape d'application manuelle d'étiquette sur un objet prédéterminé.

### DESCRIPTION DETAILLEE D'EXEMPLES DE REALISATION

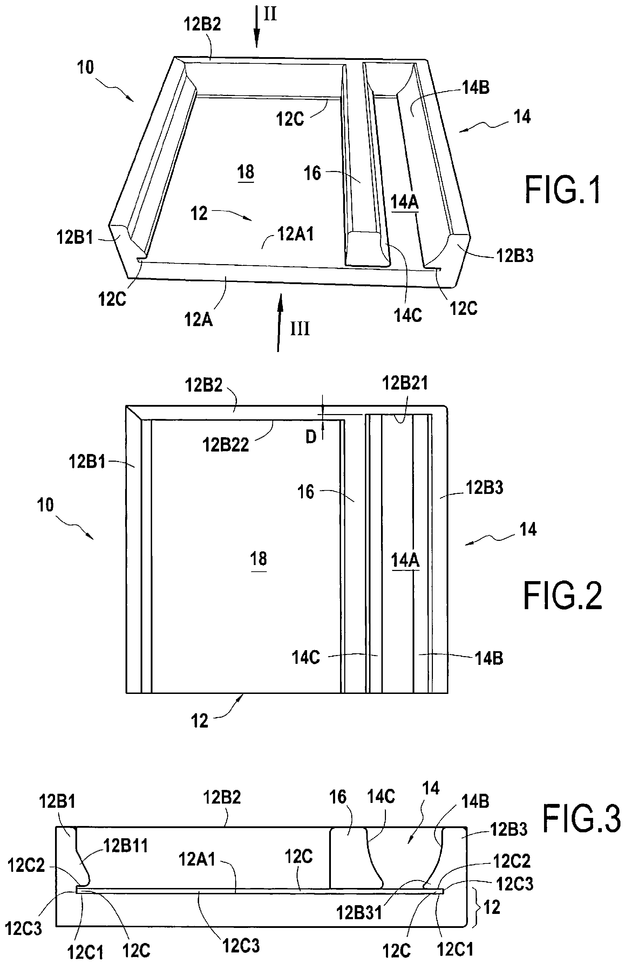

Un dispositif pour appliquer manuellement une étiquette sur un objet prédéterminé est décrit en référence aux figures 1 à 3.

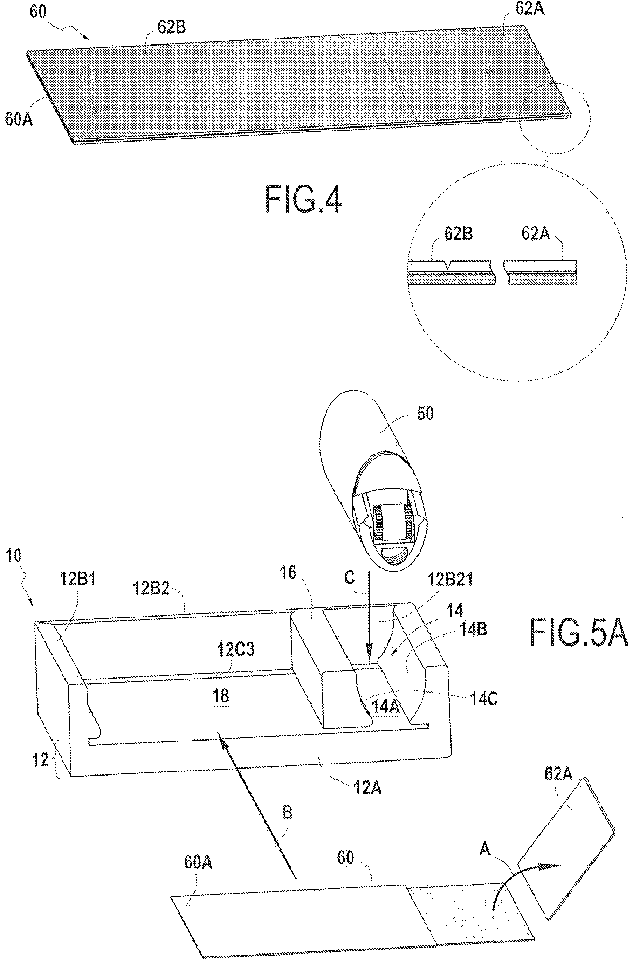

Le dispositif pour appliquer manuellement une étiquette sur un objet prédéterminé 10 comprend un premier réceptacle 12 configuré pour recevoir et maintenir une étiquette. Le dispositif 10 comprend aussi un second réceptacle 14 configuré pour recevoir un objet prédéterminé dans une position prédéterminée par rapport au premier réceptacle 12. Dans cet exemple l'objet prédéterminé est un briquet 50, de forme cylindrique de section transversale elliptique (voir figure 5A). Bien entendu, cet exemple n'est pas limité à un briquet et est applicable à tout autre objet.

Le premier réceptacle 12 comprend une embase 12A présentant une surface 12A1 carrée, cette surface 12A1 format un support pour l'étiquette 60. Trois parois 12B1, 12B2 et 12B3 s'étendent sur le pourtour de l'embase 12A, perpendiculairement à la surface 12A1. Bien entendu, ces parois 12B1, 12B2 et 12B3 s'entendent toutes les trois du même côté par rapport à l'embase 12A. Dans cet exemple, les trois parois 12B1, 12B2 et 12B3 sont contiguës et forment une bordure continue à la périphérie de la surface 12A1. Selon une variante, les trois parois peuvent bien évidement être distantes l'une de l'autre et former une bordure discontinue sur trois côtés de la surface 12A1.

La base de chacune des parois 12B1, 12B2 et 12B3 présente une rainure 12C configurée pour recevoir une étiquette, et plus particulièrement la bordure 60A d'une étiquette 60 telle que représentée sur la figure 4. Chaque rainure 12C est adjacente et tangente à la surface 12A1, et débouche sur la surface 12A1.

Plus particulièrement, dans cet exemple, les parois 12B1 et 12B3 forment des parois latérales disposées en vis-à-vis sur des côtés opposés de la surface 12A1 tandis que la paroi 12B2 forme une paroi intermédiaire s'étendant entre les parois 12B1 et 12B3 sur un côté de la surface 12A1. Ainsi, la paroi 12B2 est adjacente aux parois latérales 12B1 et 12B3, et s'étend perpendiculairement aux parois 12B1 et 12B3.

Plus particulièrement, dans cet exemple, la rainure 12C de chaque paroi comprend une première surface latérale 12C1 s'étendant dans le prolongement de la surface 12A1 et disposée en vis-à-vis d'une deuxième surface latérale 12C2. Une surface de fond 12C3, ou fond 12C3, de chaque rainure 12C forme une butée configurée pour limitée le déplacement d'une étiquette 60. Dans cet exemple, le fond 12C3 est perpendiculaire à la surface 12A1. Ainsi, de manière générale, chaque rainure 12C forme un élément de maintien configuré pour limiter le déplacement de l'étiquette 60 sur la surface 12A1.

Dans cet exemple, la deuxième surface latérale 12C2 de la rainure 12C de la paroi 12B1 est formée par un béquet 12B11 s'étendant sur toute la longueur de la paroi 12B1. De manière similaire, la deuxième surface latérale 12C2 de la rainure 12C de la paroi 12B3 est formée par béquet 12B31 décrit plus en détail ultérieurement, le béquet 12B31 s'étendant sur toute la longueur de la paroi 12B3. La paroi 12B2 ne présente pas, dans cet exemple, de béquet mais présente une épaisseur constante selon la direction perpendiculaire à la surface 12A1, la rainure 12C de cette paroi 12B2 étant ménagée dans cette épaisseur constante. Dans cet exemple, le béquet 12B11 est différent et indépendant du béquet 12B31. Selon une variante, la rainure 12C de la paroi latérale 12B1 est similaire à la rainure de la paroi intermédiaire 12B2.

Le second réceptacle 14 comprend une première partie formée par la paroi latérale 12B3, et une deuxième partie formée par une barre 16, ces première et deuxième parties étant configurées pour coopérer par complémentarité de forme avec un briquet 50. Une fenêtre 14A débouchant sur le premier réceptacle 12 est ménagée entre la première partie et la deuxième partie. On note que le maintien de l'étiquette par la barre 16 est particulièrement efficace. Ainsi la rainure 12C formée sous le béquet 12B31 est optionnelle, de sorte que selon une variante aucune rainure n'est formée entre le béquet 12B31 et la surface 12A1.

Le béquet 12B31 présente une surface concave 14B configurée pour épouser une partie du briquet 50. Cette surface 14B est disposée à l'opposé de la surface latérale 12C3 de la rainure 12C de la paroi 12B3.

La barre 16 s'étend perpendiculairement à et depuis la paroi intermédiaire 12B2. La barre 16 est distante de la surface 12A1 de manière à ce qu'une étiquette 60 puisse être glissée entre la barre 16 et l'embase 12A. La barre 16 présente en vis-à-vis de la paroi 12B3 une surface concave 14C configurée pour épouser une partie du briquet 50. Cette surface 14C est similaire à et disposée en vis-à-vis de la surface 14B.

Dans cet exemple, l'épaisseur de la paroi intermédiaire 12B2 est différente entre la barre 16 et la paroi latérale 12B3 et entre la barre 16 et la paroi latérale 12B1. En effet, la surface interne 12B21 de la paroi intermédiaire au sein du second réceptacle 14 est décalée d'une distance D par rapport à la surface interne 12B22 de la paroi intermédiaire 12B2 entre la barre 16 et la paroi latérale 12B1. La surface 12B21 forme une surface de butée pour disposer le briquet 60 au sein du second réceptacle 14. En effet, en disposant le briquet 50 contre cette surface 12B21, on ajuste la position relative du briquet 50 par rapport au premier réceptacle 12, et donc par rapport à l'étiquette 60. Ainsi, dans cet exemple, le surface 12B21 (ainsi que les surfaces 14B et 14B) permet de disposer le briquet 50 dans une position prédéterminée par rapport au premier réceptacle 12

Dans cet exemple, une deuxième fenêtre 18 est ménagée entre les parois 12B1, 12B2 et la barre 16, en vis-à-vis de la surface 12A1. Une telle fenêtre 18 permet à l'utilisateur de facilement manipuler et guider l'étiquette 60 lors de son introduction/retrait du premier réceptacle 12.

La figure 4 représente un exemple d'étiquette utilisable au sein du dispositif 10. L'étiquette 60 est une étiquette autocollante comprenant deux protections amovibles (i.e. pelables) 62A et 62B protégeant la partie encollée de l'étiquette. Dans cet exemple, la protection 62A présente une forme rectangulaire comme la fenêtre 14A et une superficie d'environ 110% de la superficie de la fenêtre 14A. Dans cet exemple, la fenêtre 14A n'a pas de bordure matérielle sur un côté. Ainsi, de manière générale, on comprend que la superficie de l'ouverture disposée en vis-à-vis de la surface 12A1 et comprise strictement entre la première partie et la deuxième partie du second réceptacle 14 est considérée comme la superficie de la fenêtre 14A.

Un procédé d'application manuelle d'étiquette sur un objet prédéterminé va maintenant être décrit en référence aux figures 5A à 7. Ce procédé met en œuvre le dispositif 10 décrit précédemment, pour appliquer une étiquette 60 sur un briquet 50.

Tout d'abord, on retire la protection 62A de l'étiquette 60 (cf. flèche A sur la figure 5A), puis on dispose l'étiquette 60 dans le premier réceptacle 12 (cf. flèche B sur la figure 5A). Plus particulièrement, dans cet exemple, on glisse la bordure 60A de l'étiquette 60 dans les rainures 12C du premier réceptacle 12. Lors de cette opération, l'étiquette 60 glisse également entre la barre 16 et l'embase 12A. L'utilisateur peut facilement guider l'étiquette 60 via la deuxième fenêtre 18 entre la barre 16 et la paroi latérale 12B1. Lorsque l'étiquette 60 est en butée contre le fond 12C3 de la rainure 12C de la paroi intermédiaire 12B2, l'étiquette 60 est disposée dans le premier réceptacle 12. Dans cette position, la partie encollée (ou la partie collante) de l'étiquette 60 est disposée en regard de la fenêtre 14A tandis que l'étiquette 60 repose sur la surface 12A1, qui forme ainsi un support pour l'étiquette 60.

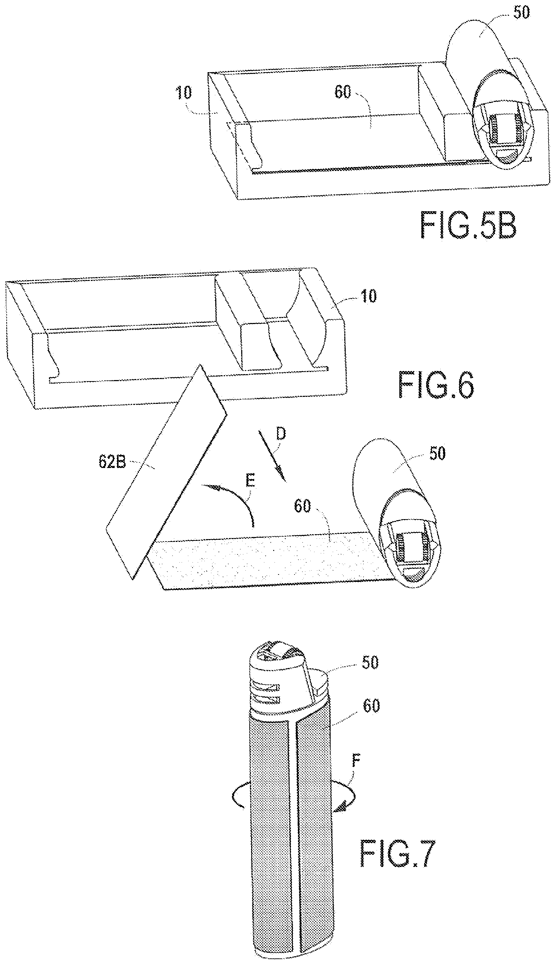

Par la suite, on dispose le briquet 50 dans le second réceptacle 14. Pour ce faire il suffit juste de placer le briquet 50 entre la barre 16 et la paroi latérale 12B3, sur les surfaces 14B et 14C (cf. flèche C sur la figure 5A). Lors de cette étape, le briquet est également placé contre la surface interne 12B21 de la paroi intermédiaire 12B2. Ainsi, le briquet 50 est dans une position prédéterminée par rapport au premier réceptacle 12, et par conséquent par rapport à l'étiquette 60. Dans cette position, le briquet 50 contacte l'étiquette 60 via la fenêtre 14A (cf. figure 5B). Ainsi, l'étiquette 60 est appliquée en partie au briquet 50.

Ensuite, on retire l'ensemble formé par le briquet 50 et l'étiquette 60 en partie appliquée au briquet 50, du dispositif 10. Pour ce faire, on fait glisser l'étiquette 60 en la faisant sortir des rainures 12C (cf. flèche D de la figure 6).

La deuxième protection 62B de l'étiquette 60 est ensuite retirée (cf. flèche E sur la figure 6). Pour finaliser l'application de l'étiquette 50 sur le briquet 50, on enroule l'étiquette 60 autour du briquet 50 (cf. flèche F sur la figure 7). Le premier collage de l'étiquette 60 sur le briquet 50 ayant été parfaitement réalisé au cours de l'étape représentée sur la figure 5B (i.e. le briquet 50 et l'étiquette 60 étant parfaitement alignés), cet enroulement est très simple tandis que le positionnement final de l'étiquette 60 sur le briquet 50 correspond à l'alignement prévu (i.e. dans cet exemple les deux bords de l'étiquette sont alignées au niveau du raccordement).

Ainsi, un utilisateur peut par exemple imprimer un motif souhaité sur une étiquette vierge, et personnaliser un ou plusieurs briquets.

Dans cet exemple, l'étiquette 60 est carrée. Selon une variante non représentée, l'étiquette peut présenter une forme quelconque, dans la mesure où elle peut être disposée de manière certaine et reproductible au sein du premier réceptacle 12. Par exemple, l'étiquette 60 présente un support de positionnement pelable de forme adaptée au premier réceptacle 12 (dans cet exemple, de forme carrée). Grâce à un tel support, l'étiquette peut être disposée à l'emplacement dédié, et ce de manière reproductible, au sein du premier réceptacle.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif pour appliquer manuellement une étiquette sur un objet prédéterminé (10), comprenant un premier réceptacle (12) configuré pour recevoir et maintenir l'étiquette (60) et un second réceptacle (14) configuré pour recevoir et maintenir l'objet (50) dans une position prédéterminée par rapport au premier réceptacle (12), le second réceptacle (14) étant adjacent au premier réceptacle (12) et présentant une fenêtre (14A) débouchant sur le premier réceptacle (12) de manière à pouvoir appliquer l'étiquette (60) en tout ou partie sur l'objet (50), dans lequel le premier réceptacle (12) comprend une embase (12A) présentant une surface (12A1) formant support pour l'étiquette, et au moins un élément de maintien (12C) configurée pour limiter le déplacement de l'étiquette (60) par rapport à la surface (12A1), dans lequel l'élément de maintien (12C) comprend au moins une butée (12C3), le dispositif comprenant au moins une rainure (12C) adjacente à la surface (12A1), la rainure (12C) présentant un fond (12C3) formant un angle avec la surface (12A1), le fond (12C3) formant la butée (12C3).

2. Dispositif (10) selon la revendication 1, dans lequel la surface (12A1) est de forme carrée ou rectangulaire, une rainure (12C) étant ménagée sur trois côtés du carré ou du rectangle, à la périphérie de la surface (12A1).

3. Dispositif (10) selon la revendication 2, dans lequel chaque rainure (12C) est ménagée dans une paroi (12B1, 12B2, 12B3) sensiblement perpendiculaire à la surface (12A1).

4. Dispositif (10) selon l'une quelconque des revendications 1 à 3, dans lequel le second réceptacle (14) comprend deux parties configurées (12B3, 16) pour supporter l'objet (50), chaque partie étant configurée pour coopérer par complémentarité de forme avec l'objet (50).

5. Dispositif (10) selon les revendications 3 et 4, dans lequel une première paroi (12B3) parmi les trois parois (12B1, 12B2, 12B3) forme une partie tandis que l'autre partie est formée par une barre (16) parallèle à la première paroi (12B3), ladite barre (16) s'étendant depuis une paroi (12B2) adjacente à la première paroi (12B3).

6. Dispositif (10) selon l'une quelconque des revendications 1 à 5, dans lequel l'étiquette (60) est une étiquette autocollante.

7. Dispositif (10) selon la revendication 6, dans lequel l'étiquette autocollante (60) comporte deux protections amovibles distinctes (62A, 62B) protégeant la surface collante de l'étiquette, une des protections (62A) étant de même forme que la fenêtre (14A) et présentant une superficie comprise entre 80% et 120% de la superficie de la fenêtre (14A).

8. Dispositif (10) selon l'une quelconque des revendications 1 à 7, dans lequel l'objet (50) est cylindrique.

9. Dispositif selon les revendications 2 et 8, dans lequel le deuxième logement est configuré pour recevoir l'objet de sorte que l'axe de la forme cylindrique de l'objet soit parallèle à deux rainures et perpendiculaire à la troisième rainure, le deuxième réceptacle étant ouvert du côté de la surface dépourvu de rainure.

10. Procédé d'application manuelle d'une étiquette sur un objet prédéterminé, comprenant les étapes de :
- fournir un dispositif (10) selon l'une quelconque des revendications 1 à 9,
- disposer une étiquette (60) dans le premier réceptacle (12) de sorte qu'une partie collante de l'étiquette soit disposée en regard de la fenêtre (14A) du second réceptacle (14),
- disposer l'objet (50) dans le second réceptacle (14), grâce à quoi la partie collante est collée sur l'objet (50),
- retirer l'objet (50) et l'étiquette (60) du dispositif (10), et
- coller le reste de l'étiquette (60) sur l'objet (50).

## Patentansprüche

1. Vorrichtung zum manuellen Aufbringen eines Etiketts auf einen vorbestimmten Gegenstand (10), enthaltend einen ersten Behälter (12), der so konfiguriert ist, dass er das Etikett (60) aufnimmt und hält, und einen zweiten Behälter (14), der konfiguriert ist, dass er den Gegenstand (50) in einer vorbestimmten Position relativ zum ersten Behälter (12) aufnimmt und hält, wobei der zweite Behälter (14) an den ersten Behälter (12) angrenzt und ein Fenster (14A) aufweist, das sich zum ersten Behälter (12) hin öffnet, um das Etikett (60) ganz oder teilweise auf den Gegenstand (50) aufbringen zu können, wobei der erste Behälter (12) eine Basis (12A) enthält, die eine Oberfläche (12A1) als Auflage für das Etikett bildet, und mindestens ein Halteelement (12C), das so konfiguriert ist, dass es die Bewegung des Etiketts (60) relativ zur Oberfläche (12A1) begrenzt, wobei das Halteelement (12C) mindestens einen Anschlag (12C3) enthält, wobei die Vorrichtung mindestens eine Nut (12C) enthält, die an die Oberfläche (12A1) angrenzt, wobei die Nut (12C) einen Boden (12C3) enthält, der einen Winkel mit der Oberfläche (12A1) bildet, wobei der Boden (12C3) den Anschlag (12C3) bildet.

2. Vorrichtung (10) nach Anspruch 1, wobei die Oberfläche (12A1) eine quadratische oder rechteckige Form hat, wobei an drei Seiten des Quadrats oder Rechtecks am Umfang der Oberfläche (12A1) eine Nut (12C) ausgebildet ist.

3. Vorrichtung (10) nach Anspruch 2, wobei jede Nut (12C) in einer Wand (12B1, 12B2, 12B3) ausgebildet ist, die im Wesentlichen senkrecht zur Oberfläche (12A1) ist.

4. Vorrichtung (10) nach einem der Ansprüche 1 bis 3, wobei der zweite Behälter (14) zwei konfigurierte Teile (12B3, 16) zum Tragen des Gegenstands (50) enthält, wobei jeder Teil so konfiguriert ist, dass er formschlüssig mit dem Gegenstand (50) zusammenzuwirkt.

5. Vorrichtung (10) nach Anspruch 3 und 4, wobei eine erste Wand (12B3) der drei Wände (12B1, 12B2, 12B3) einen Teil bildet, während der andere Teil durch einen zur ersten Wand (12B3) parallelen Steg (16) gebildet wird, wobei der Steg (16) von einer an die erste Wand (12B3) angrenzenden Wand (12B2) ausgeht.

6. Vorrichtung (10) nach einem der Ansprüche 1 bis 5, wobei das Etikett (60) ein selbstklebendes Etikett ist.

7. Vorrichtung (10) nach Anspruch 6, wobei das selbstklebende Etikett (60) zwei verschiedene abnehmbare Schutzvorrichtungen (62A, 62B) umfasst, die die Klebefläche des Etiketts schützen, wobei eine der Schutzvorrichtungen (62A) die gleiche Form wie das Fenster (14A) hat und eine Fläche zwischen 80 % und 120 % der Fläche des Fensters (14A) aufweist.

8. Vorrichtung (10) nach einem der Ansprüche 1 bis 7, wobei der Gegenstand (50) zylindrisch ist.

9. Vorrichtung nach Anspruch 2 und 8, wobei die zweite Aufnahme so konfiguriert ist, dass sie den Gegenstand so aufnimmt, dass die Achse der zylindrischen Form des Gegenstands parallel zu zwei Nuten und senkrecht zur dritten Nut verläuft, wobei die zweite Aufnahme auf der Seite der nutfreien Fläche offen ist.

10. Verfahren zum manuellen Aufbringen eines Etiketts auf einen vorbestimmten Gegenstand, enthaltend die folgenden Schritte:
- Bereitstellen einer Vorrichtung (10) nach einem der Ansprüche 1 bis 9,
- Anordnen eines Etiketts (60) im ersten Behälter (12), so dass ein klebender Teil des Etiketts gegenüber dem Fenster (14A) des zweiten Behälters (14) angeordnet ist,
- Anordnen des Gegenstands (50) im zweiten Behälter (14), wodurch der klebende Teil am Gegenstand (50) haften bleibt,
- Entfernen des Gegenstands (50) und des Etiketts (60) von der Vorrichtung (10), und
- Kleben des restlichen Etiketts (60) auf den Gegenstand (50).

## Claims

1. Device for manually applying a label to a predetermined object (10), the device comprising a first receptacle (12) designed to receive and hold the label (60) and a second receptacle (14) designed to receive and hold the object (50) in a predetermined position relative to the first receptacle (12), the second receptacle (14) being adjacent to the first receptacle (12) and having a window (14A) opening onto the first receptacle (12) so that the label (60) can be applied in whole or in part to the object (50), wherein the first receptacle (12) comprises a base (12A) having a surface (12A1) forming a support for the label, and at least one holding element (12C) designed to limit the movement of the label (60) relative to the surface (12A1), wherein the holding element (12C) comprises at least one stop (12C3), the device comprising at least one groove (12C) adjacent to the surface (12A1), the groove (12C) having a bottom (12C3) forming an angle with the surface (12A1), the bottom (12C3) forming the stop (12C3).

2. Device (10) according to claim 1, wherein the surface (12A1) is of square or rectangular shape, a groove (12C) being formed on three sides of the square or rectangle, at the periphery of the surface (12A1).

3. Device (10) according to claim 2, wherein each groove (12C) is formed in a wall (12B1, 12B2, 12B3) substantially perpendicular to the surface (12A1).

4. Device (10) according to any of claims 1 to 3, wherein the second receptacle (14) comprises two parts (12B3, 16) designed to support the object (50), each part being designed to form-fittingly engage with the object (50).

5. Device (10) according to claims 3 and 4, wherein a first wall (12B3) from the three walls (12B1, 12B2, 12B3) forms one part while the other part is formed by a bar (16) parallel to the first wall (12B3), said bar (16) extending from a wall (12B2) adjacent to the first wall (12B3).

6. Device (10) according to any of claims 1 to 5, wherein the label (60) is a self-adhesive label.

7. Device (10) according to claim 6, wherein the self-adhesive label (60) comprises two separate removable protectors (62A, 62B) protecting the adhesive surface of the label, one of the protectors (62A) being of the same shape as the window (14A) and having a surface area of between 80% and 120% of the surface area of the window (14A).

8. Device (10) according to any of claims 1 to 7, wherein the object (50) is cylindrical.

9. Device according to claims 2 and 8, wherein the second housing is designed to receive the object such that the axis of the cylindrical shape of the object is parallel to two grooves and perpendicular to the third groove, the second receptacle being open on the side of the surface without the groove.

10. Method for manually applying a label to a predetermined object, comprising the steps of:
- providing a device (10) according to any of claims 1 to 9,
- arranging a label (60) in the first receptacle (12) such that an adhesive part of the label is arranged opposite the window (14A) of the second receptacle (14),
- arranging the object (50) in the second receptacle (14), as a result of which the adhesive part is stuck on the object (50),
- removing the object (50) and the label (60) from the device (10), and
- sticking the rest of the label (60) on the object (50).
